# EUROPÄISCHE PATENTANMELDUNG

(11) **EP 4 102 090 A1**
(43) Veröffentlichungstag der Anmeldung: **14.12.2022**
(21) Anmeldenummer: 21178016.8
(22) Anmeldetag: 07.06.2021
(51) Int. Cl.: F16D 3/58, F16D 3/76

(54) **ELASTISCHE KLAUENKUPPLUNG**

(71) Anmelder: Centa-Antriebe Kirschey GmbH, 42781 Haan (DE)
(72) Erfinder: HASAN, Mahamudul, 44803 Bochum (DE); FITSCH, Martin, 42115 Wuppertal (DE)
(74) Vertreter: V.O.

(57) **Zusammenfassung**

Vorliegende Erfindung betrifft eine elastische Klauenkupplung (1) zur Übertragung eines, um eine Rotationsache Ax wirkenden Drehmoments Mx, von einem Antriebsmittel (2) auf ein Abtriebsmittel (4), mit einem ersten Kupplungselement (10), umfassend ein inneres Ringelement (12), und einem relativ zum ersten Kupplungselement (10) drehbar gelagerten zweiten Kupplungselement (20), umfassend ein äußeres Ringelement (22), wobei das innere Ringelement (12) und das äußere Ringelement (22) derart zueinander weisend angeordnet sind, dass sie zwischen sich einen gemeinsamen Ringraum (60) bilden, wobei in diesem gemeinsamen Ringraum (60), wenigstens ein relativ zum inneren und äußeren Ringelement (12, 22) drehbar gelagertes mittleres Ringelement (32) angeordnet ist, wobei das innere Ringelement (12) und das benachbarte mittlere Ringelement (32) einen inneren Ringspalt (14), und das mittlere Ringelement (32) und das benachbarte äußere Ringelement (22) einen äußeren Ringspalt (24) bilden, und wobei an diesen benachbarten Ringelementen (12, 22, 32), aufeinander zuweisende Lagerböden (42) ausgebildet sind, an denen elastisch verformbare Druckkörper (50) anstehen, die in den Ringspalten (14, 24) angeordnet und derart mit ihnen kraftgekoppelt sind, dass über sie das Drehmoment Mx zwischen dem äußeren Ringelement (22) und dem inneren Ringelement (12) unter Zwischenschaltung des mittleren Ringelements (32) übertragbar ist.

## Beschreibung

Vorliegende Erfindung betrifft eine elastische Klauenkupplung und insbesondere eine Klauenkupplung, die um eine Rotationsachse A_{X} rotierbar ist, zur Übertragung eines um diese Rotationsachse A_{X} wirkenden Drehmoments Mx, von einem Antriebsmittel auf ein Abtriebsmittel. Die Klauenkupplung weist ein erstes Kupplungselement, umfassend ein insbesondere konzentrisch zur Rotationsachse A_{X} entlang einem ersten Umfang U₁ verlaufendes inneres Ringelement, und ein relativ zum ersten Kupplungselement drehbar gelagertes zweites Kupplungselement, ebenfalls umfassend ein insbesondere konzentrisch zur Rotationsachse A_{X} entlang einem äußeren Umfang U₂ verlaufendes äußeres Ringelement. Das erste Kupplungselement ist mit dem Abtriebsmittel und das zweite Kupplungselement mit dem Antriebsmittel verbunden oder verbindbar bzw. umgekehrt. Die Bezeichnung erstes und zweites Kupplungselement wirkt hier lediglich zum leichteren Verständnis und definiert nicht, welches Kupplungselement welchem Mittel zugeordnet ist bzw. zugeordnet werden kann.

Zwischen dem inneren Ringelement und dem äußeren Ringelement sind Druckkörper derart kraftgekoppelt, dass über sie ein Drehmoment zwischen dem inneren Ringelement und dem äußeren Ringelement übertragen werden kann.

Derartige Klauenkupplungen sind aus dem Stand der Technik bekannt. Die jeweiligen Ringelemente weisen dabei meist eine oder mehrere Klauen auf, zwischen denen die Druckelemente meist spielfrei kraftgekoppelt sind. Es sind unterschiedliche Klauenanordnungen, Klauenausbildungen sowie Geometrien und Anordnungen der Druckkörper vorstellbar. Insbesondere sind Klauen meist isoliert ausgebildet und im Wesentlichen ringförmig am Kupplungselement angeordnet.

Als nachteilig hat sich jedoch bei den aus dem Stand der Technik bekannten Klauenkupplungen die sehr hohe Verschleißanfälligkeit herausgestellt, insbesondere wenn es gilt, Klauenkupplungen mit einem sehr weichen Ansprechverhalten anzubieten. Zudem besteht das Problem, Kupplungen zur Verfügung zu stellen, die eine sehr gute Resonanzdämpfung aufweisen bzw. Resonanzen zwischen Abtriebs- und Antriebsmittel maximal kompensieren sollen. Relevant ist zudem, dass es den meisten bekannten Kupplungen nicht gelingt, in Abhängigkeit der Drehzahl des Antriebsmittels einen zunehmenden Verlauf der Steifigkeit der Kupplung zu generieren. Insbesondere keine zufriedenstellende Lösung bekannt bei niedrigen Drehzahlen ein weiches Ansprechverhalten zur Verfügung zu stellen, dass dann, bei steigender Drehzahl, mehr oder weniger linear zunimmt.

Aufgabe der vorliegenden Erfindung ist es folglich, eine Klauenkupplung zur Verfügung zu stellen, die bei einem einfachen Aufbau eine dauerhafte und den obigen Erfordernissen entsprechend ansprechende Kraftkupplung zwischen einem Antriebsmittel und einem Abtriebsmittel erlaubt.

Diese Aufgabe wird durch eine Klauenkupplung gemäß dem unabhängigen Anspruch gelöst.

Insbesondere wird diese Aufgabe gelöst durch eine um eine Rotationsachse Ax rotierbare elastische Klauenkupplung zur Übertragung eines, um die Rotationsache Ax wirkenden Drehmoments Mx, von einem Antriebsmittel auf ein Abtriebsmittel, mit einem ersten Kupplungselement, umfassend ein insbesondere konzentrisch zur Rotationsachse Ax entlang einem ersten Umfang U₁ verlaufendes inneres Ringelement, und einem relativ zum ersten Kupplungselement drehbar gelagerten zweiten Kupplungselement, umfassend ein insbesondere konzentrisch zur Rotationsachse Ax entlang einem äußeren Umfang U₂ verlaufendes äußeres Ringelement, wobei das erste Kupplungselement mit dem Abtriebsmittel und das zweite Kupplungselement mit dem Antriebsmittel verbunden oder verbindbar ist, oder umgekehrt, wobei das innere Ringelement und das äußere Ringelement derart zueinander weisend angeordnet sind, dass sie zwischen sich einen gemeinsamen Ringraum bilden, wobei in diesem gemeinsamen Ringraum, wenigstens ein relativ zum inneren Ringelement und zum äußeren Ringelement drehbar gelagertes mittleres Ringelement angeordnet ist, wobei das innere Ringelement und das benachbarte mittlere Ringelement einen inneren Ringspalt bilden, und das mittlere Ringelement und das benachbarte äußere Ringelement einen äußeren Ringspalt bilden, und wobei an diesen benachbarten, den jeweiligen inneren bzw. äußeren Ringspalt bildenden Ringelementen, aufeinander zuweisende Lagerböden ausgebildet sind, an denen elastisch verformbare Druckkörper anstehen, die in diesen inneren und äußeren Ringspalten angeordnet und derart mit ihnen kraftgekoppelt sind, dass über sie das Drehmoment Mx zwischen dem äußeren Ringelement und dem inneren Ringelement unter Zwischenschaltung des mittleren Ringelements übertragbar ist.

Ein wesentlicher Punkt der Erfindung ist also die frei gelagerte und insbesondere rotierbar gelagerte Anordnung des mittleren Ringelements zwischen dem äußeren und dem inneren Ringelement. Selbstverständlich können hier auch eine Mehrzahl solcher mittlerer Ringelemente angeordnet werden, wobei sich dann neben dem inneren und dem äußeren Ringspalt auch in Bezug auf die benachbarten mittleren Ringelemente quasi weiter innere und weitere äußere Ringspalte ergeben. Die Anordnung mit solchen mehreren mittleren Ringelementen ist vom Umfang der Erfindung mit umfasst.

Durch die Kraftkopplung der Druckkörper an den benachbarten Ringelementen und angeordnet in dem durch diese Ringelemente gebildeten Ringspalten, kommt es zu einer Drehmomentenübertragung vom aktiv und dem Antriebsmittel zugeordneten inneren bzw. äußeren Ringelement über das mittlere Ringelement zu dem dem Abtriebsmittel zugeordneten äußeren bzw. inneren Ringelement.

Optional werden bei der Übertragung des Drehmoments zwischen den benachbarten Ringelementen die zwischengelagerten Druckkörper verformt.

u.a. sind die Druckkörper derart elastisch ausgeführt und angeordnet, dass eine Bewegungsreihenfolge der Ringelemente zeitlich zueinander versetzt erfolgt. Ist beispielsweise das äußere Ringelement dem Antriebsmittel zugeordnet, bewegt sich beim Anliegen des Drehmoments durch das Antriebsmittel zuerst das äußere Ringelement, dann das mittlere Ringelement und schließlich das innere Ringelement. Ist das innere Ringelement einem Antriebsmittel zugeordnet, bewegt sich in umgekehrter Reihenfolge nachfolgend dem inneren Ringelement das mittlere Ringelement und schließlich das äußere Ringelement, das dann mit dem Abtriebsmittel gekoppelt ist.

Optional sind die Ringspalte und insbesondere benachbarte Ringspalte als zur Rotationsachse Ax konzentrische Ringe ausgebildet. Diese Ringe müssen nicht unbedingt einer idealen Kreisform entsprechen, sie können Rücksprünge, Vorsprünge oder dergleichen geometrisch Besonderheiten aufweisen. Optional gilt, dass die zuvor erwähnten Umfänge U₁ und U₂ bzw. Umfänge von weiteren vorgesehenen insbesondere mittleren Ringelementen, unterschiedlich groß sind. Bei einer besonderen Ausführungsform sind die Umfänge derart groß, dass sie sämtliche Ringelemente konzentrisch zueinander anordnen lassen, wobei deren jeweiliges Zentrum auf der Rotationsachse Ax liegt. Die Umfänge können Umfangsbereich mit einer in Radialrichtung verlaufenden Breite haben, in den die Ringelemente angeordnet sind.

Die Ringelemente können vollumlaufend einstückig sein, sie können aber auch aus mehreren Einzelkomponenten bestehen. Es ist denkbar, dass ein Ringelement und insbesondere alle Ringelemente in Radialrichtung weisende Wandflächen aufweisen, wobei gegenüberliegende Wandflächen zweier benachbarter Ringelemente jeweils einen Ringspalt begrenzen bzw. Teilbereiche eines solchen Ringspalts begrenzen. Von einer solchen Definition mit umfasst sind auch Wandflächen, die nicht vollständig orthogonal zur Radialrichtung der Klauenkupplung bzw. des jeweiligen Kupplungselements verlaufen, sondern auch geneigt dazu. Optional verlaufen die Ringelemente in einer Ebene, die koaxial zur Rotationsachse verläuft. Die Ringelemente bzw. deren Wandelemente sind optional orthogonal zu einer Ebene angeordnet, die senkrecht zur Rotationsachse Ax verläuft. Lagerböden gegenüberliegender Ringelemente, an denen jeweils wenigstens ein Druckkörper ansteht, sind optional entlang der Rotationsachse A_{X} koaxial ausgebildet. Entlang der Umfangsrichtung R_{U} ist es denkbar, dass sich die Wandelemente relativ zueinander und voneinander wegbewegend verlaufen oder auch flächenparallel zueinander verlaufen.

Optional sind die Druckkörper als Wälzelemente ausgebildet, die jeweils um ihre Wälzachse, koaxial zur Rotationsachse A_{X}, rotierbar sind. Rotierbar sind sie optional auch dann, wenn sie in den Ringspalten aufgenommen sind und an den Lagerböden der Ringelemente anstehen. Optional sind die Druckkörper in Umfangsrichtung R_{U} im jeweiligen Ringspalt und optional entlang der Lagerböden rollbar angeordnet.
Eine Rotation bzw. Rollbewegung ist beispielsweise dann gegeben, wenn sich zwei benachbarte Ringelemente in Umfangsrichtung relativ zueinander bewegen, beispielsweise ein Ringelement in Richtung des wirkenden Drehmoments, während das andere benachbarte Ringelement noch nicht oder geringfügiger bewegt wird, wobei durch die Bewegung des einen Ringelements der zwischengelagerte Druckkörper mitbewegt wird. Optional rollt dabei der Druckkörper am Lagerboden wenigstens eines Ringelements und optional an den Lagerböden beider benachbarter Ringelemente entlang.

Es ist denkbar, dass die Lagerböden in Lagertaschen, wie sie im Folgenden noch im Detail beschrieben werden, ausgebildet sind, und dass die in diesen Lagertaschen an den Lagerböden gelagerten Druckkörper in Umfangsrichtung R_{U} bewegbar und insbesondere rollbar sind. Eine Rollbewegung kann grundsätzlich ohne, aber auch mit einer Verformung der Druckkörper vollzogen werden. Es ist denkbar, dass sich bei einer Rollbewegung der Druckkörper erst nicht oder nur geringfügig und dann zunehmend verformt, wodurch die Verformungskraft und dadurch auch die Pressung zwischen den beiden benachbarten Ringelementen zunimmt.

Optional bilden wenigstens zwei aufeinander zuweisende Lagerböden, jeder dieser Lagerböden, angeordnet an einem der benachbarten Ringelemente, einen gemeinsamen Lagerraum für wenigstens einen Druckkörper. Optional erstreckt sich ein Lagerraum koaxial zur Rotationsachse und optional derart, dass er ein Lagervolumen definiert, das sich entlang dieser koaxialen Achse erstreckt. In diesem Lagerraum ist optional dann der Druckkörper eingeführt, der optional ebenfalls eine Haupterstreckungsachse aufweist, die sich koaxial zur Rotationsachse erstreckt. Insbesondere bei der Ausbildung der Druckkörper als Wälzelemente ist dies denkbar. Eine Rollbewegung des Druckkörpers erfolgt optional um eine Achse koaxial zur Rotationsachse.

Optional umgreifen wenigstens zwei aufeinander zuweisende Lagerböden, jeder dieser Lagerböden angeordnet an einem der benachbarten Ringelemente, wenigstens einen, zwischen sich im Ringspalt angeordneten Druckkörper, wenigstens abschnittsweise ringförmig oder dergleichen umfänglich. Insbesondere umgreifen sie den Druckkörper optional derart, dass eine verformungsfreie Radialbewegung des Druckkörpers verhindert wird. Selbiges ist optional auch für eine verformungsfreie Bewegung in Umfangsrichtung denkbar. Um eine Bewegung der Druckkörper in Axialrichtung, also koaxial zur Rotationsachse, zu verhindern, ist es denkbar, Stirnseitenlager an der Klauenkupplung anzuordnen, die ein axiales Herausgleiten der Druckkörper aus den Lagerräumen bzw. den Lagertaschen in Richtung der Rotationsachse verhindern. Solche Stirnseitenlager können optional am mittleren Ringelement angeordnet sein. Ergänzend oder alternativ ist es aber auch denkbar, solche Lagerplatten am äußeren und/oder inneren Ringelement anzubringen. Sie können zudem Lagerelemente zur Reibungsreduktion in Bezug auf die Druckkörper und insbesondere deren Stirnseiten, die optional an den Stirnseitenlagern anstehen, aufweisen. Solche Stirnseitenlager können beispielsweise Platten, Plattenringe, Anstehflächen etc. aufweisen.

Es ist denkbar, dass wenigstens zwei aufeinander zuweisende Lagerböden, jeder dieser Lagerböden angeordnet an einem der benachbarten Ringelemente, derart in Bezug auf die Umfangsrichtung R_{U} der Klauenkupplung ausgerichtet sind, dass, bei einer Last-Bewegung B_{L} eines der Ringelemente infolge des wirkenden Drehmoments M_{X}, der in Radialrichtung R_{R} gemessene Relativabstand a wenigstens von Teilabschnitten der aufeinander zuweisenden Lagerböden, optional an Stellen, an denen der Druckkörper ansteht, reduziert wird. Bei einer Last-Bewegung B_{L} bewegen sich optional wenigstens Teilabschnitte der gegenüberliegenden Lagerböden aufeinander zu. Ein im Lagerraum bzw. zwischen den zu einander weisenden Lagerböden angeordneter Druckkörper kann auf diese Weise komprimiert werden. Optional sind die Lagerböden derart ausgebildet und insbesondere geformt, dass sich wenigstens Teilbereiche gegenüberliegende Lagerböden nicht nur aufeinander zu bewegen, sondern auch in Umfangsrichtung relativ zueinander bewegen. Ein zwischengeordneter Druckkörper wird bei einer solchen Anordnung optional einer Scherbelastung unterworfen. Eine solche Scherbelastung kann ein Drehmoment von einem Ringelement auf ein benachbartes Ringelement übertragen. So kann ein Zusammenhang zwischen auftretenden Radialkompressionen und Scherkompressionen hergestellt werden. Es ist denkbar, die Lagerböden derart auszubilden, dass bei zunehmender radialer Kompression der Druckkörper eine zunehmend größere Scherkraft in Umfangsrichtung übertragen werden kann.

Optional sind die Lagerböden derart als Lager für die Druckkörper ausgebildet, dass sie, beim Anliegen des Drehmoments Mx, eine Umfangs-Kraftkomponente Fu, optional eine Scher-Kraftkomponente, in Richtung R_{M} des Drehmoments, und eine Radial-Kraftkomponente F_{R} in Radialrichtung R_{R} auf die anstehenden Druckkörper einwirken. Optional weisen insbesondere in diesem Zusammenhang die Lagerböden dazu Wandelemente auf, die zur Umfangsrichtung und zur Radialrichtung geneigt sind, um so sowohl eine Umfangs-Kraftkomponente als auch eine Radial-Kraftkomponente auf den jeweiligen Druckkörper bei einer Bewegung der Ringelemente relativ zueinander zu bewirken. Die Ausrichtung der Lagerböden in Bezug auf die Umfangsrichtung und die Radialrichtung kann variabel gestaltet werden. Durch eine solche variable Ausgestaltung kann beispielsweise die Zunahme und Abnahme der Umfangs-Kraftkomponente und/oder der Radial-Kraftkomponente gesteuert werden.

Optional sind wenigstens zwei aufeinander zuweisende Lagerböden, jeder dieser Lagerböden angeordnet an einem der benachbarten Ringelemente, derart in Bezug auf die Umfangsrichtung der Klauenkupplung ausgerichtet, dass, bei einer Last-Bewegung B_{L} eines der Ringelemente in Richtung des einwirkenden Drehmoments M_{X}, (und insbesondere bewirkt durch das Drehmoment M_{X}) das benachbarte Ringelement unter Verformung des zwischen den Lagerböden gelagerten Druckkörpers, optional zeitversetzt in dieselbe Richtung bewegt wird.

Um eine Kompression der Druckkörper in Abhängigkeit der Relativbewegung der benachbarten Ringelemente zu ermöglichen, ist beispielsweise eine in Radialrichtung verlaufende Breite wenigstens eines Ringspalts, über seinen Umfang betrachtet, intermittierend kleiner und größer ausgebildet. Das bedeutet mit anderen Worten, dass sich die Breite über den Umfang des Ringspalts verändern kann. Über eine solche Veränderung kann dann eine Kompression eines zwischengeordneten Druckelements bei einer insbesondere in Umfangsrichtung auftretenden Relativbewegung zwischen benachbarten Ringelementen und insbesondere Lagerböden dieser Ringelemente erreicht werden.

Es ist denkbar, dass an wenigstens einem Ringelement Lagertaschen ausgebildet sind, in denen die Lagerböden verlaufen. Deren Taschenöffnung weisen optional in den jeweiligen Ringspalt. Optional weisen die Lagerböden dabei auf das benachbarte Ringelement zu. In diesen Lagertaschen kann wenigstens ein Druckkörper insbesondere teilweise aufgenommen werden. Die Lagertaschen bilden optional quasi eine Lagerschale zur Aufnahme eines Teilbereichs des Druckkörpers. Unterschiedliche Geometrien dieser Lagertaschen sind denkbar, wie im Folgenden noch im Detail beschrieben.

Es ist denkbar, dass Lagerräume zur Aufnahme wenigstens eines Druckkörpers, durch zwei sich gegenüberliegende Lagertaschen gebildet werden, jede dieser Lagertaschen angeordnet an einem der benachbarten Ringelemente, wobei wenigstens ein Druckkörper sowohl in der Lagertasche des einen Ringelements als auch in der Lagertasche des benachbarten Ringelements aufgenommen oder aufnehmbar ist. Die Lagertaschen ergänzen sich optional derart, dass sie den Druckkörper insbesondere in einem unbelasteten Zustand der Klauenkupplung ortsfest fixieren.

Wie bereits zuvor erwähnt, ist es denkbar, dass die Druckkörper insbesondere in Umfangsrichtung in diesen Lagertaschen rollbar sind und insbesondere bei einer zwischen zwei gegenüberliegenden Lagertaschen auftretenden Relativbewegung. Eine solche Rollbewegung kann optional bei zeitgleicher Verformung des Druckkörpers erfolgen.

Es ist denkbar, dass bei zwei sich gegenüberliegenden Lagertaschen, jede dieser Lagertaschen angeordnet an einem der benachbarten Ringelemente, in Umfangsrichtung R_{U} und bei nicht anliegendem Drehmoment M_{X} derart zueinander ausgerichtet sind, dass deren Taschen-Tiefpunkte P_{T} auf einer gemeinsamen Radialachse A_{R} liegen. Optional definieren zwei sich gegenüberliegende Lagertaschen einen maximal großen Lagerraum für einen Druckkörper, wenn kein Drehmoment M_{X} an der Klauenkupplung anliegt. Es ist denkbar, Lagertaschen derart auszubilden, dass sich der durch die Lagertaschen gebildete Aufnahmeraum reduziert, sobald ein Drehmoment M_{X} angelegt wird und insbesondere, sobald durch das angelegte Drehmoment wenigstens ein Ringelement relativ zum anderen Ringelement in Umfangsrichtung bewegt wird. Es ist denkbar, eine Reduzierung des Lagerraums und insbesondere des Volumens des Lagerraums derart auszuführen, dass dadurch der darin gelagerte Druckkörper komprimiert wird.

Es ist denkbar, dass sich eine in Radialrichtung R_{R} verlaufende Tiefe T wenigstens einer Lagertasche in Umfangsrichtung R_{U} des Ringelements, an der die Lagertasche ausgebildet ist, verändert, optional stetig verändert, und weiter optional zunimmt und wieder abnimmt. Es ist in Abschnitten eine lineare Veränderung denkbar, es können aber auch Veränderungen mit sich ändernder Steigung ausgeführt sein. Insbesondere kann die Veränderung der Tiefe exponentiell, parabelförmig, der Geometrie einer Klothoide erfolgen sein. Es ist denkbar, dass durch entsprechend sich in der Tiefe reduzierende Lagertaschen eine zunehmende Komprimierung des darin gelagerten Druckkörpers erfolgt. Es ist denkbar, die Reduktion der Tiefe derart auszubilden, dass, in Abhängigkeit einer Lastbewegung um die Rotationsachse des Ringelements, eine linear steigende Kompression des Druckkörpers erfolgt, es ist aber auch denkbar, die Veränderung der Tiefe derart auszubilden, dass sich eine davon abweichende Steigerung der Kompression, beispielsweise eine exponentielle Kompression, ergibt. Es ist denkbar Lagertaschen so anzuordnen, dass bei geringer Lastbewegung, insbesondere beim Anliegen geringer Drehmomente, eine sehr viel geringere Kompression erfolgt als bei einer größeren Lastbewegung, z.B. infolge eines größer werdenden Drehmoments. Dies garantiert unter anderem, dass bei anfänglichen Auslenkungen des Ringelements ein sehr weiches Ansprechverhalten der Klauenkupplung gegeben ist. Mit zunehmender Auslenkung wird die Kupplung dann härter.

Es ist denkbar, dass bei einer Relativbewegung der Ringelemente relativ zueinander in Umfangsrichtung Lagerböden der benachbarten Ringelemente sich derart aneinander vorbei bewegen, das infolge von Lagerböden, die zur Umfangsrichtung geneigt angeordnet sind, deren Relativabstand abnimmt, was zu einer Kompression der Druckkörper führt.

Es ist denkbar, dass Lagertaschen einen kreisbogenförmigen oder dergleichen zu wenigstens einem Abschnitt des unverformten anstehenden Druckkörpers komplementären in Radialrichtung zum Ringspalt weisenden Lagerbodenabschnitt aufweisen, wobei optional zwei solcher, sich gegenüberliegender Lagertaschen, eine jede angeordnet an einem der benachbarten Ringelemente, solche Lagerbodenabschnitte aufweisen, die zusammen einen Lagerraum einschließen, der in seiner Geometrie wenigstens abschnittsweise des unbelasteten Druckkörpers entspricht. Es ist denkbar, wenn der Druckkörper beispielsweise ein in Axialrichtung verlaufender Wälzkörper bzw. Zylinder ist, einen Lagerbodenabschnitt derart kreisbogenförmig bzw. an die Geometrie des Druckkörpers angepasst auszubilden, das er eine spielfreie Lagerung desselben erlaubt. Ein Lagerbodenabschnitt kann also beispielsweise einen kreisbogenförmig verlaufenden Lagerboden aufweisen.

Es ist denkbar, dass Lagertaschen einen kreisbogenförmigen oder dergleichen zu wenigstens einem Abschnitt des unverformten anstehenden Druckkörpers komplementären in Radialrichtung R_{R} zum Ringspalt hin weisenden Lagerbodenabschnitt aufweisen, der optional in einen in Radialrichtung R_{R} zum Ringspalt hin weisenden Rampenbodenabschnitt ausläuft. Ein solcher Rampenbodenabschnitt kann auch getrennt davon bei einer Lagertasche, die jedwede Form haben kann, ausgebildet sein. Ein solcher Rampenbodenabschnitt unterscheidet sich optional von der Geometrie der restlichen Lagertasche bzw. eines Abschnittes davon, und zwar insbesondere der Geometrie in einem Bereich, in dem der Druckkörper angeordnet ist, wenn kein Drehmoment an der Klauenkupplung anliegt. Über die Geometrie eines Rampenbodenabschnitts kann optional das Ansprechverhalten der Klauenkupplung bestimmt werden.

Optional weist der Rampenbodenabschnitt, in Radialrichtung zum Ringspalt hin weisend, eine optional abschnittsweise stetige Steigung und/oder eine zunehmende Steigung auf. Neben einer stetigen (zunehmenden) Steigung kann die Steigung auch unstetig zunehmen. Eine Steigungszunahme bedeutet, sobald ein Druckkörper entlang dieses Rampenbodenabschnitts bewegt und insbesondere gerollt wird, eine entsprechend immer stärker zunehmende Kompression des Druckkörpers, wobei optional die in Umfangsrichtung übertragbaren Kräfte steigen. Bei gleicher Steigung nimmt die Kompression gelichmäßig zu. Eine solche (Roll-)Bewegung kann bei einer Relativbewegung zweier benachbarter Ringelemente auftreten.

Die sich gegenüberliegenden Lagertaschen sind optional so ausgebildet, dass sie, in Abhängigkeit der relativen Auslenkung zwischen zwei in Umfangsrichtung sich relativ zueinander bewegenden Ringelemente, eine Scherkraft auf den zwischengelagerten Druckkörper aufbringen, wobei optional je größer die Auslenkung ist, desto größer die Scherkraft wirkt.
Optional folgen Lagerböden von Lagertaschen, und optional Rampenbodenabschnitte der Lagertaschen, in Radialrichtung zum Ringspalt hin weisend, wenigstens abschnittsweise einem Geometrieabschnitt einer Spirale, optional einer Klothoide, einer Parabel etc. Bei derartigen Geometrien nimmt die Steigung optional stetig zu.
Das bedeutet, dass sich die Tiefe der Lagertasche in Umfangsrichtung ebenfalls geometriebedingt stetig reduzieren und insbesondere zunehmend reduzieren kann.

Optional sind bei benachbarten Ringelementen gegenüberliegende Rampenbodenabschnitte von Lagertaschen in Bezug auf die Drehmomentenrichtung R_{M} am einen Ringelement als nachlaufende Rampenbodenabschnitte und am benachbarten Ringelement als vorauslaufende Rampenbodenabschnitte ausgebildet. Vorauslaufend bedeutet hier optional, dass sie in Richtung des Drehmoments am vorderen Ende der Lagertasche ausgebildet sind. Nachlaufend bedeutet optional, dass sie in Bezug auf die Drehmomentenrichtung am hinteren Ende der Lagertasche ausgebildet sind. Es ist denkbar, dass bei dem mit dem Antriebsmittel verbundenen oder verbindbaren Ringelement, Rampenbodenabschnitte in Bezug auf die Drehmomentenrichtung R_{M} als nachlaufende Rampenbodenabschnitte ausgebildet sind, und optional gegenüberliegende Rampenbodenabschnitte des benachbarten Ringelements als vorauslaufende Rampenbodenabschnitte ausgebildet sind.

Auch ist es denkbar, dass sich Lagertaschenabschnitte, optional Rampenbodenabschnitte, ausgebildet an einem Ringelement, derart in Umfangsrichtung R_{U} erstrecken, dass am benachbarten Ringelement, wenigstens in einem Zustand, in dem kein Drehmoment M_{X} wirkt, in Radialrichtung R_{R} gegenüberliegend, keine Lagertaschenabschnitte ausgebildet sind. Es ist denkbar, insbesondere in diesem Zusammenhang, dass sich gegenüberliegende Lagertaschen benachbarter Rampenbodenabschnitte in Umfangsrichtung versetzt zueinander erstrecken. Es können Lagertaschen an einem Ringelement beginnen, während die gegenüberliegende Lagertasche etwas später oder früher beginnt.

Selbiges gilt natürlich für das Enden dieser Lagertaschen. Es ist möglich, dass sämtliche Lagertaschen eines Ringelements identisch ausgebildet sind. Es ist denkbar, dass sich gegenüberliegende Lagertaschen benachbarter Ringelemente identisch ausgebildet sind. Es ist aber auch denkbar, dass radial weiter außen liegende Lagertaschen eines Ringelements etwas größer und insbesondere in Umfangsrichtung länger ausgebildet sind, als weiter innen liegende Lagertaschen, insbesondere des benachbarten Ringelements. Es ist denkbar, sich gegenüberliegende Lagertaschen zweier benachbarter Ringelemente identisch oder aber kleienr oder größer aber mit derselben Geometrie, allerdings um 180° um eine Achse, optional um 160° - 200° koaxial zur Rotationsachse gedreht auszubilden.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen schematisch:
- Figs. 1 und 2: eine isometrische Darstellung einer Ausführungsform der Klauenkupplung aus unterschiedlichen Sichtwinkeln;
- Figs. 3 und 4: die Darstellungen gemäß den Figs. 1 und 2 ohne Stirnseitenlager(ringe);
- Fig. 5: einen Querschnitt durch die Ausführungsform gemäß Fig. 1;
- Fig. 6: einen Längsschnitt durch die Ausführungsform gemäß Fig. 6;
- Figs. 7 bis 9: unterschiedliche Last- und Auslenkungszustände der Ausführungsform gemäß Fig. 1;
- Fig. 10 bis 13: weitere Ausführungsformen der Erfindung mit unterschiedlich wirkenden Momenten.

Im Folgenden werden für gleiche und gleich wirkende Bauteile dieselben Bezugsziffern verwendet, wobei zur Unterscheidung bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

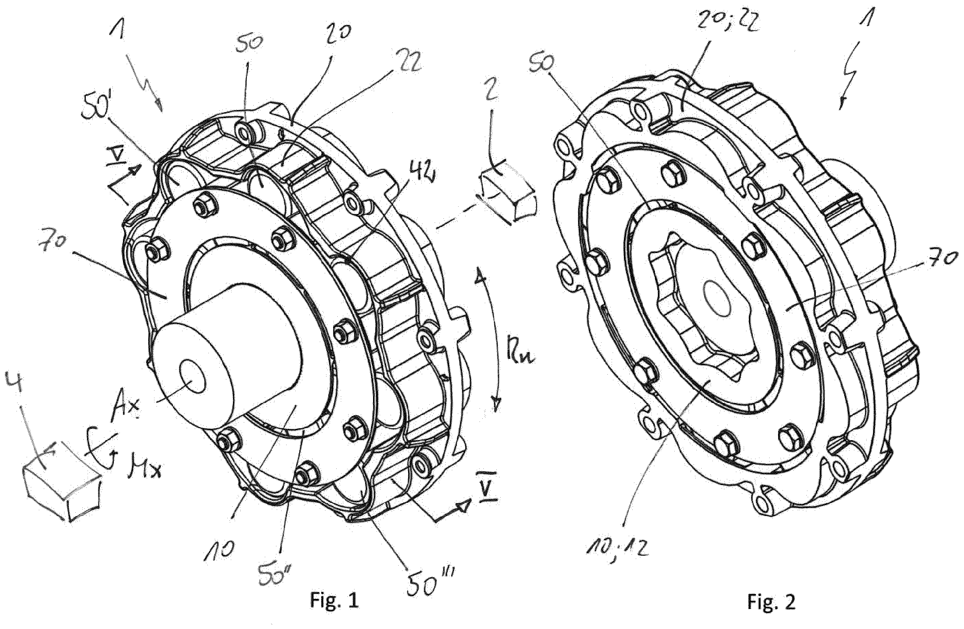

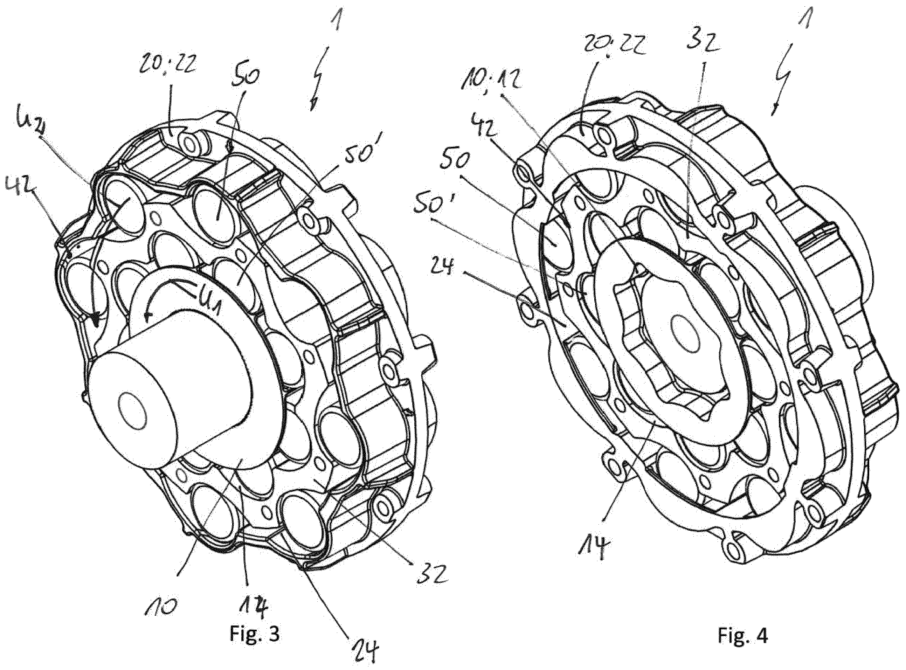

Die Darstellungen gemäß den Figs. 1 bis 6 zeigen eine Ausführungsform der elastischen Klauenkupplung 1, mit Merkmalen, wie sie zuvor im Detail beschrieben wurden. Sämtliche zuvor genannten Ausführungsformen bei dieser hier dargestellten Ausführungsform optional vorhanden. Dies gilt in Kombination als auch für sich alleine genommen. Insofern wird explizit auf die zuvor beschriebenen Passagen verwiesen und diese auf die hier dargestellten Ausführungsformen übertragen.

Die hier dargestellte Ausführungsform weist ein erstes Kupplungselement 10 und ein zweites Kupplungselement 20 auf. Das erste Kupplungselement 10 ist exemplarisch mit einem Abtriebsmittel, beispielsweise einem Getriebe, und das zweite Kupplungselement 20 exemplarisch mit einem Antriebsmittel 2, beispielsweise einem Motor verbunden oder verbindbar. Das erste Kupplungselement 10 und das zweite Kupplungselement 20 sind relativ zueinander verdrehbar angeordnet, wobei diese Verdrehung, wie im Folgenden noch im Detail beschrieben, durch kraftkoppelnde Druckkörper 50 definiert und gesteuert wird.

Das erste Kupplungselement 10 umfasst ein insbesondere konzentrisch zur Rotationsachse Ax entlang einem ersten Umfang U₁ verlaufendes inneres Ringelement 12. Das zweite Kupplungselement 20 dagegen umfasst ein insbesondere konzentrisch zur Rotationsachse A_{X} entlang einem äußeren Umfang U₂ verlaufendes äußeres Ringelement 22. Natürlich können, je nach Ausführungsform des ersten und zweiten Kupplungselements das Ringelement des zweiten Kupplungselements als inneres Ringelement und das Ringelement des ersten Kupplungselements als äußeres Ringelement angeordnet sein. Die Definition von "ersten" und "zweiten" dient hier lediglich der Erläuterung und stellt keine einschränkende, insbesondere definierende Positionsangabe dar.

Das erste Kupplungselement ist relativ zum zweiten Kupplungselement drehbar gelagert und insbesondere entlang der Rotationsachse A_{X}, um die das Drehmoment M_{X} verläuft, drehbar gelagert. Die Klauenkupplung 1 weist einen Umfang auf, der ebenfalls durch einen Radius, verlaufend durch die Rotationsachse A_{X}, definiert ist. Die Umfangslinie der Klauenkupplung kann ringförmig sein, sie kann aber natürlich auch Rücksprünge und Vorsprünge oder dergleichen geometrische Unregelmäßigkeiten aufweisen.

Selbiges gilt für die Geometrien des inneren Ringelements und des äußeren Ringelements.

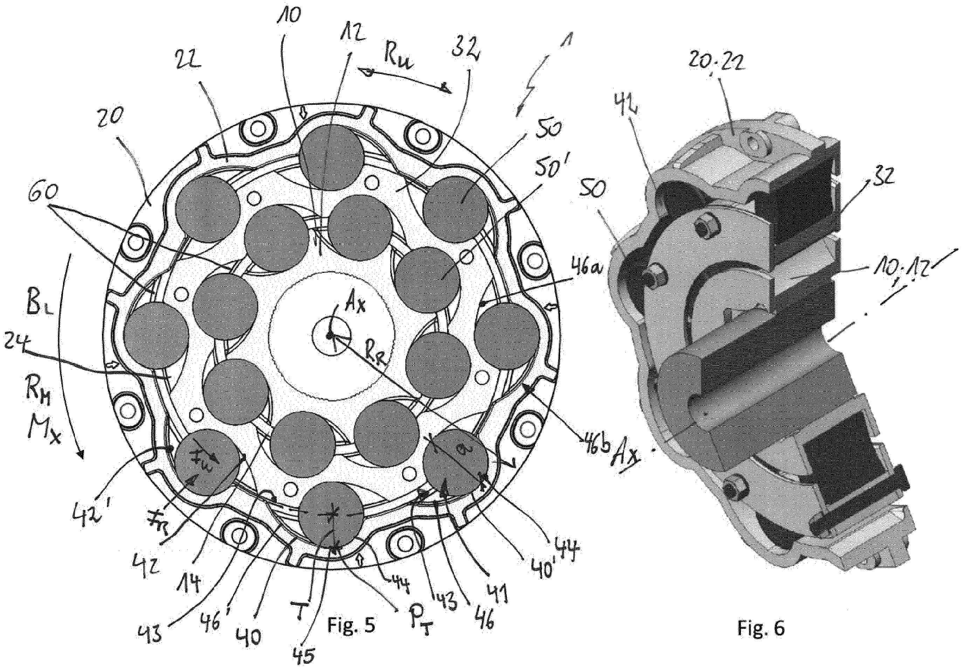

Das innere Ringelement 12 und das äußere Ringelement 22 sind derart zueinander weisend angeordnet, dass sie zwischen sich einen gemeinsamen Ringraum 60 bilden. Dieser Ringraum 60 ist exemplarisch in Fig. 5 dargestellt.

In diesem gemeinsamen Ringraum 60 ist ein mittleres Ringelement 32 angeordnet, das relativ zum inneren Ringelement 12 und zum äußeren Ringelement 22 drehbar gelagert ist. Optional ist ganz grundsätzlich das mittlere Ringelement ausschließlich über Druckkörper 50 im gemeinsamen Ringraum 60 gelagert, zumindest in Bezug auf Bewegungen entlang der in Fig. 5 dargestellten Schnittebene.

Das innere Ringelement 12 und das benachbarte mittlere Ringelement 32 bilden einen inneren Ringspalt 14. Das mittlere Ringelement 32 und das benachbarte äußere Ringelement 22 bilden einen äußeren Ringspalt 24.

An diesen benachbarten, den jeweiligen inneren bzw. äußeren Ringspalt bildenden Ringelementen 12, 22, 32 sind aufeinander zuweisende Lagerböden 42 ausgebildet. An diesen stehen elastisch verformbare Druckkörper 50 an. Die Druckkörper 50 sind in den inneren und äußeren Ringspalten 14, 24 angeordnet und derart mit ihnen kraftgekoppelt, dass über sie das Drehmoment M_{X} (s. Figs. 1 und 5) zwischen dem äußeren Ringelement 22 und dem inneren Ringelement 12 unter Zwischenschaltung des mittleren Ringelements 32 übertragbar ist.

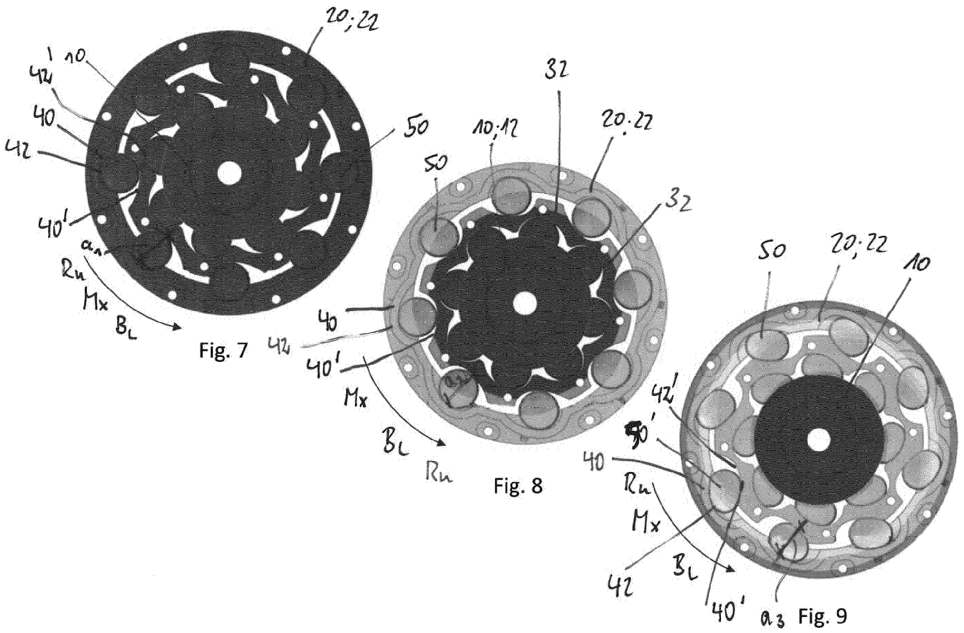

Die Druckkörper 50 sind hier exemplarisch als Wälzelemente ausgebildet, die jeweils um ihre Wälzachse (nicht dargestellt), die koaxial zur Rotationsachse A_{X} verläuft, rotierbar sind. Wie im Folgenden noch im Detail, insbesondere mit Bezug auf die Figs. 7 bis 9 beschrieben, sind diese Druckkörper 50 in Umfangsrichtung R_{U} im jeweiligen Ringspalt 14, 24 und optional entlang der Lagerböden 42, rollbar angeordnet. Wie im Detail noch beschrieben, erfolgt diese Rollbewegung hier exemplarisch unter gleichzeitiger Verformung der Druckkörper 10 beim Anliegen des Drehmoments M_{X} und beim Ausführen einer Last-Bewegung B_{L}, wie sie in den Figs. 7 bis 9 dargestellt ist. Sich gegenüberliegende Lagerböden 42, jeweils angeordnet an benachbarten Ringelementen 12, 32 bzw. 32, 22 können einen gemeinsamen Lagerraum für wenigstens einen dieser Druckkörper 50 bilden.

Die Lagerräume bzw. die die Lagerräume definierenden Lagerböden sind bei dieser Ausführungsform exemplarisch so ausgebildet, dass sie einen Druckkörper 50 aufnehmen und diesen wenigstens abschnittsweise ringförmig oder dergleichen umfänglich umgreifen. Dies ist insbesondere in Fig. 5 dargestellt, wo erkennbar ist, dass ein Druckkörper radial innenseitig und radial außenseitig von einem Lagerboden 42 eingeschlossen wird, sodass der Druckkörper 50 daran ansteht.

Die Lagerböden sind dabei exemplarisch in Lagertaschen 40 ausgebildet, die an den Ringelementen 12, 22, 32 angeordnet sind. Die Lagertaschen weisen hier Taschenöffnungen 43 auf, die in die jeweiligen Ringspalten 14, 24 und optional auf das jeweils benachbarte Ringelement 12, 22, 32 zu weisen (s. insbesondere Fig. 5). Die Lagerböden 42 bzw. die Lagertaschen sind derart relativ zueinander angeordnet und ausgebildet, dass bei einer Last-Bewegung B_{L} eines der Ringelemente 12, 22, 32, hier beispielsweise des äußeren Ringelements 20, infolge des wirkenden Drehmoments Mx, der in Radialrichtung R_{R} gemessene Relativabstand a wenigstens von Teilabschnitten der aufeinander weisenden Lagerböden 42 reduziert wird. Das bedeutet, dass ein darin angeordneter Druckkörper wenigstens in Radialrichtung komprimiert wird. Dies kann insbesondere an Stellen passieren, an denen der Druckkörper an den Lagerböden ansteht. Dieser Vorgang ist in den Figs. 7 bis 9 im Detail dargestellt. Erkennbar ist, dass bei einer Last-Bewegung B_{L} des äußeren Ringelements 22 infolge des an diesem wirkenden Drehmoments Mx in den Figs. dargestellte Relativabstand a₁ bis as zunimmt, je weiter das äußere Ringelement sich in Momentenrichtung R_{M} bzw. Umfangsrichtung Ru bewegt wird. Es ist grundsätzlich denkbar, dass die Momentenrichtung R_{M} der Umfangsrichtung Ru entspricht.

Auch erkennbar ist, dass im Zuge dieser Bewegung des äußeren Ringelements eine Verformung der zwischen äußerem Ringelement 22 und mittleren Ringelement 32 angeordneten Druckkörper 50 erfolgt, die im Verlauf der Last-Bewegung des äußeren Ringelements dann zu einer Last-Bewegung des mittleren Ringelements 32 führt (s. Figs. 8 und 9). Auch hier kommt es dann zu einer Verformung der weiter innen gelagerten Druckkörper und schließlich zu einer Drehmomentenübertragung auf das hier innen gelagerter erste Kupplungselement bzw. das (nicht dargestellten) innere Ringelement.

Auch erkennbar ist in den Figs. 7 bis 9, dass während der Last-Bewegung der einzelnen Ringelemente 12, 22, 32 eine Rollbewegung der Druckkörper 50 innerhalb der Lagertaschen erfolgt.

Wie insbesondere in Fig. 5 dargestellt, können die Lagerböden derart als Lager für die Druckkörper 50 ausgebildet sein, dass sie beim Anliegen des Drehmoments M_{X} und optional der resultierenden Last-Bewegung B_{L} eine Umfangs-Kraftkomponente Fu in Richtung R_{M} des Drehmoments M_{X}, und eine Radial-Kraftkomponente F_{R} in Radialrichtung R_{R} auf die anstehenden Druckkörper 50 einwirken. Diese beiden Kraftkomponenten bewirken eine Kompression des Druckkörpers und darüber hinaus eine in Momentenrichtung wirkende Drehmomentübertragung. Durch die resultierende Radial-Kraftkomponente kann optional das Ansprechverhalten der Klauenkupplung definiert werden.

Bei dieser Ausführungsform werden Lagerräume 41 zur Aufnahme wenigstens eines Druckkörpers 50 durch zwei sich gegenüberliegende Lagertaschen gebildet, wobei dieser Lagertaschen 40 an einem der benachbarten Ringelemente 12, 22 bzw. 32, 22 angeordnet ist. Die Lagertaschen bzw. ihre Lagertaschenöffnungen weisen bei dieser Ausführungsform aufeinander zu. Wenigstens ein Druckkörper 50 ist dabei sowohl in einer Lagertasche 40 des einen Ringelements 12, 32 als auch in der Lagertasche 40 des benachbarten Ringelements 32, 22 aufgenommen bzw. aufnehmbar. Erkennbar ist zudem (s. Fig. 5), dass optional bei den zwei sich gegenüberliegenden Lagertaschen bei nicht anliegendem Drehmoment Mx Taschen-Tiefpunkte P_{T} der Lagertaschen auf einer gemeinsamen Radialachse A_{R} liegen. Auch erkennbar ist, dass bei Nichtanliegen des Drehmoments M_{X} die in den Lagertaschen gelagerten Druckkörper nicht verformt sein können. Erst bei Anlegen des Drehmoments M_{X} und der resultierenden Last-Bewegung B_{L} kommt es zu einem Verschieben der gegenüberliegenden Lagertaschen relativ zueinander und dadurch zu einem Verformen der Druckkörper mit resultierender Kraftkopplung in Radial- und Umfangsrichtung und somit zu einer Drehmomentenübertragung zwischen den einzelnen Ringelementen.

Die Lagertaschen sind dabei derart definiert, dass sich ihre Tiefe entlang der Umfangsrichtung Ru verändert und insbesondere stetig verändert. Die Tiefe nimmt bei diesen Lagertaschen in Umfangsrichtung erst zu und dann wieder ab. Es ist optional möglich, über die Steigung der Ab- bzw. Zunahme das Ansprechverhalten bzw. die Lastübertragungsfähigkeit der Klauenkupplung zu bestimmen.

Bei dieser Ausführungsform weisen die Lagertaschen einen kreisbogenförmigen oder dergleichen zu wenigstens einem Abschnitt des unverformten anstehenden Druckkörpers 50 komplementären, in Radialrichtung zum Ringspalt weisenden Lagerbodenabschnitt 44 auf. Auch dieser ist in Fig. 5 dargestellt. Der Lagerbodenabschnitt ist hier exemplarisch um ca. 100°, optional ca. 90° zum Außenumfang des Druckkörpers komplementär. Im Detail ist es denkbar, dass der Lagerbodenabschnitt den Außenumfang eines Kreissegments abbildet. In diesem Kreissegmentbogen liegt der Druckkörper im nicht belasteten Zustand, wie er beispielsweise in den Figs. 5 und 7 dargestellt ist, vollflächig am Lagerbodenabschnitt 44 an. Bei dieser Ausführungsform bilden zwei gegenüberliegende Lagertaschen, aufweisend solche Lagerabschnitte 44, einen Lagerraum 41, der in seiner Geometrie wenigstens abschnittsweise der Geometrie des unbelasteten Druckkörpers entspricht.

Es ist weiter denkbar, und insbesondere bei der hier dargestellten Ausführungsform ausgeführt, dass die Lagertasche anschließend an den Lagerbodenabschnitt in einen Rampenbodenabschnitt ausläuft, der sich in Radialrichtung in Richtung des Ringspalts bewegt und darin ausläuft. Bei dieser Ausführungsform ist es so, dass aus dem kreisbogensegmentförmigen Lagerbodenabschnitt 44 jeweils ein Rampenboden 46 ausläuft und insbesondere stetig an diesen angeschlossen ist.

Der Rampenbodenabschnitt kann, in Radialrichtung zum Ringspalt hin weisend, eine optional stetig zunehmende Steigung aufweisen. Dies ist insbesondere in Fig. 5 erkennbar. Im Anschlussbereich 45 zwischen Lagerbodenabschnitt 44 und Rampenbodenabschnitt 46 weist exemplarisch der Lagerboden keine Steigung auf, er bewegt sich also nicht auf den Ringspalt und insbesondere die Rotationsachse zu. An der Lagertasche 40 des äußeren Ringelements schließt sich dann in Zeichnungsebene linksseitig von diesem Ubergangsbereich 45 die Lagerbodenrampe 46 an. Diese weist zu Beginn eine sehr geringe Steigung auf, die dann sukzessive, je weiter man sich vom Übergangsbereich 45 entfernt, zunimmt. Unterschiedliche Geometrien dieser Rampenbodenabschnitte 46 sind denkbar. So können die Rampenbodenabschnitte beispielsweise einer Spirale und optional einer Klothoide folgen. Dies ist hier exemplarisch dargestellt. Es können jedoch auch andere Formen, beispielsweise Parabeln, Wellenformen, aber auch Geraden mit linearer Steigung, wenigstens abschnittsweise ausgeführt sein.

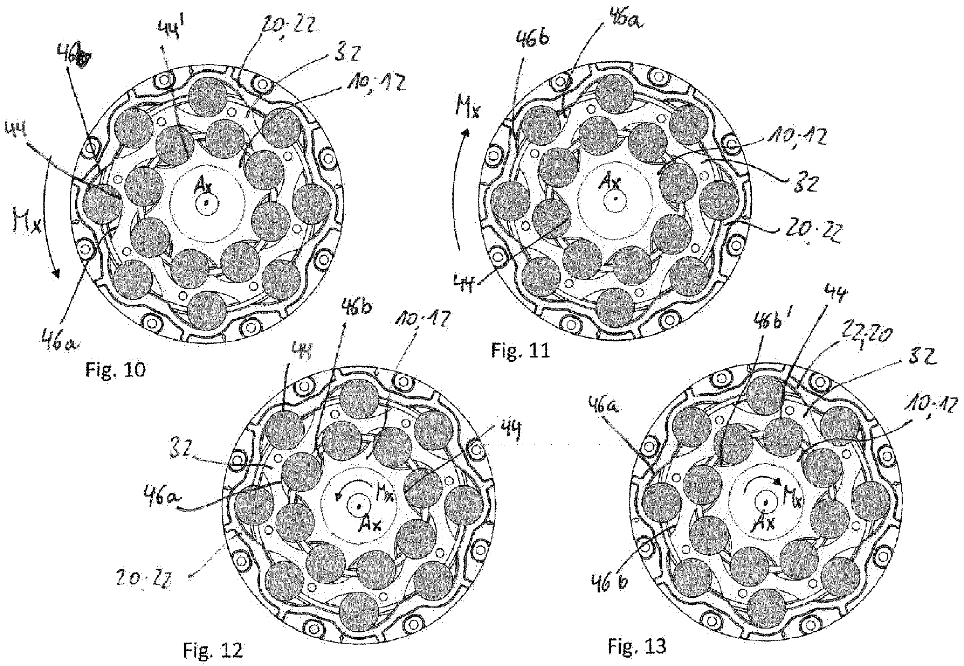

Wie in den Figs. 5, 10 bis 13 im Detail dargestellt, können bei benachbarten Ringelementen 12, 32 bzw. 32, 22 gegenüberliegende Rampenbodenabschnitte 46 von Lagertaschen 40 in Bezug auf die Drehmomentenrichtung R_{M} am einen Ringelement 12, 32 als nachlaufende Rampenbodenabschnitte 46a und am benachbarten Ringelement 32, 22 als vorauslaufende Rampenbodenabschnitte 46b ausgebildet sein. Bei den in Figs. 1 und 10 dargestellten Ausführungsformen weist das mit dem Antriebsmittel 2 verbundene äußere Ringelement 22 in Bezug auf die Drehmomentenrichtung R_{M} nachlaufende Rampenbodenabschnitte 46b auf. Das benachbarte Ringelement 32 weist diesen gegenüberliegende Rampenbodenabschnitte 46 auf, die als vorauslaufende Rampenbodenabschnitte 46a ausgebildet sind.

In den Figs. 10 bis 13 sind hierzu unterschiedliche Ausführungsformen dargestellt, die sich in der Richtung der anliegenden Drehmomente Mx als auch im Abschluss des Antriebs- bzw. Abtriebsmittels unterscheiden. So ist bei den Figs. 10 und 11 das Antriebsmittel am äußeren Ringelement 22 bzw. Kupplungselement 20 angeschlossen, wobei es in Fig. 10 entgegen und in Fig. 11 im Uhrzeigersinn auf das zweite Kupplungselement 20 einwirkt. In den Figs. 12 und 13 ist dagegen das erste Kupplungselement und somit das innere Ringelement 12 das aktiv angetriebene und mit dem Antriebsmittel 2 verbundene Element. Auch hier sind zwei unterschiedliche Drehmomentenrichtungen (gegen den Uhrzeigersinn in Fig. 12 und im Uhrzeigersinn in Fig. 13) dargestellt. In Abhängigkeit des angetriebenen Bauteils und der Drehmomentenrichtung weist die Kupplung unterschiedliche Ausrichtungen der nach- bzw. vorlaufenden Rampenbodenabschnitte auf.

Bei der hier dargestellten Ausführungsform erstrecken sich optional Lagertaschenabschnitte und insbesondere die Rampenbodenabschnitte 46, ausgebildet an einem Ringelement 12, 32, derart in Umfangsrichtung R_{U}, dass am benachbarten Ringelement 32, 22, wenigstens in einem Zustand, in dem kein Drehmoment M_{X} wirkt (s. beispielsweise Fig. 5 und die Figs. 10 bis 13), in Radialrichtung R_{R} gegenüberliegend keine Lagertaschenabschnitte ausgebildet. Es ist denkbar, dass erst nach Durchführung der Last-Bewegung B_{L} (s. Figs. 7 bis 9) die jeweiligen Lagertaschenabschnitte in Deckung kommen und so den zwischengelagerten Druckkörper komprimieren.

## Patentansprüche

1. Um eine Rotationsachse A_{X} rotierbare elastische Klauenkupplung (1) zur Übertragung eines, um die Rotationsache A_{X} wirkenden Drehmoments M_{X}, von einem Antriebsmittel (2) auf ein Abtriebsmittel (4), mit:
einem ersten Kupplungselement (10), umfassend ein insbesondere konzentrisch zur Rotationsachse A_{X} entlang einem ersten Umfang U₁ verlaufendes inneres Ringelement (12), und
einem relativ zum ersten Kupplungselement (10) drehbar gelagerten zweiten Kupplungselement (20), umfassend ein insbesondere konzentrisch zur Rotationsachse Ax entlang einem äußeren Umfang U₂ verlaufendes äußeres Ringelement (22), wobei
das erste Kupplungselement (10) mit dem Abtriebsmittel (4) und das zweite Kupplungselement (20) mit dem Antriebsmittel (2) verbunden oder verbindbar ist, oder umgekehrt, wobei
das innere Ringelement (12) und das äußere Ringelement (22) derart zueinander weisend angeordnet sind, dass sie zwischen sich einen gemeinsamen Ringraum (60) bilden, wobei
in diesem gemeinsamen Ringraum (60), wenigstens ein relativ zum inneren Ringelement (12) und zum äußeren Ringelement (22) drehbar gelagertes mittleres Ringelement (32) angeordnet ist, wobei
das innere Ringelement (12) und das benachbarte mittlere Ringelement (32) einen inneren Ringspalt (14) bilden, und das mittlere Ringelement (32) und das benachbarte äußere Ringelement (22) einen äußeren Ringspalt (24) bilden, und wobei
an diesen benachbarten, den jeweiligen inneren bzw. äußeren Ringspalt (14, 24) bildenden Ringelementen (12, 22, 32), aufeinander zuweisende Lagerböden (42) ausgebildet sind, an denen elastisch verformbare Druckkörper (50) anstehen, die in diesen inneren und äußeren Ringspalten (14, 24) angeordnet und derart mit ihnen kraftgekoppelt sind, dass über sie das Drehmoment M_{X} zwischen dem äußeren Ringelement (22) und dem inneren Ringelement (12) unter Zwischenschaltung des mittleren Ringelements (32) übertragbar ist.

2. Klauenkupplung nach Anspruch 1,
**dadurch gekennzeichnet, dass**
die Druckkörper (50) als Wälzelement ausgebildet sind, die jeweils um ihre Wälzachse, coaxial zur Rotationsachse Ax rotierbar sind.

3. Klauenkupplung nach einem der Ansprüche 1 und 2,
**dadurch gekennzeichnet, dass**
die Druckkörper (50) in Umfangsrichtung Ru im jeweiligen Ringspalt (14, 24) und optional entlang der Lagerböden (42) rollbar angeordnet sind.

4. Klauenkupplung nach einem der vorhergehenden Ansprüche,
**dadurch gekennzeichnet, dass**
wenigstens zwei aufeinander zuweisende Lagerböden (42), jeder dieser Lagerböden (42) angeordnet an einem der benachbarten Ringelemente (12, 32; 32, 22), einen gemeinsamen Lagerraum für wenigstens einen Druckkörper (50) bilden.

5. Klauenkupplung nach einem der vorhergehenden Ansprüche,
**dadurch gekennzeichnet, dass**
wenigstens zwei aufeinander zuweisende Lagerböden (42), jeder dieser Lagerböden (42) angeordnet an einem der benachbarten Ringelemente (12, 32; 32, 22), wenigstens einen, zwischen sich im Ringspalt (14, 24) angeordneten Druckkörper (50), wenigstens abschnittsweise ringförmig oder dergleichen umfänglich umgreifen.

6. Klauenkupplung nach einem der vorhergehenden Ansprüche,
**dadurch gekennzeichnet, dass**
wenigstens zwei aufeinander zuweisende Lagerböden (42), jeder dieser Lagerböden (42) angeordnet an einem der benachbarten Ringelemente (12, 32; 32, 22), derart in Bezug auf die Umfangsrichtung R_{U} der Klauenkupplung (1) ausgerichtet sind, dass, bei einer Last-Bewegung B_{L} eines der Ringelemente (12, 22, 32) in Folge des wirkenden Drehmoments M_{X}, der in Radialrichtung R_{R} gemessene Relativabstand a wenigstens von Teilabschnitten der aufeinander zuweisenden Lagerböden (42), optional an Stellen, an denen der Druckkörper (50) ansteht, reduziert wird.

7. Klauenkupplung nach einem der vorhergehenden Ansprüche,
**dadurch gekennzeichnet, dass**
Lagerböden (42) derart als Lager für die Druckkörper (50) ausgebildet sind, dass sie, beim Anliegen des Drehmomentes M_{X}, eine Umfangs-Kraftkomponente F_{U} in Richtung R_{M} des Drehmoments, und eine Radial-Kraftkomponente F_{R} in Radialrichtung R_{R}, auf die anstehenden Druckkörper (50) einwirken.

8. Klauenkupplung nach
**dadurch gekennzeichnet, dass**
an wenigstens einem Ringelement (12; 22; 32) Lagertaschen (40) ausgebildet sind, in denen die Lagerböden (42) verlaufen, und deren Taschenöffnungen (43) in den jeweiligen Ringspalt (14, 24) und optional auf das benachbarte Ringelement (12, 22, 32) zu weisen.

9. Klauenkupplung nach einem der vorhergehenden Ansprüche, insbesondere Anspruch 8,
**dadurch gekennzeichnet, dass**
Lagerräume (41) zur Aufnahme wenigstens eines Druckkörpers (50) durch zwei sich gegenüberliegende Lagertaschen (40) gebildet werden, jede dieser Lagertaschen (40) angeordnet an einem der benachbarten Ringelemente (12, 32; 32, 22), wobei wenigstens ein Druckkörper (50) sowohl in der Lagertasche (40) des einen Ringelementes (12; 32) als auch in der Lagertasche (40) des benachbarten Ringelementes (32; 22) aufgenommen oder aufnehmbar ist.

10. Klauenkupplung nach einem der vorhergehenden Ansprüche, insbesondere einem der Ansprüche 8 und 9,
**dadurch gekennzeichnet, dass**
zwei sich gegenüberliegende Lagertaschen (40), jede dieser Lagertaschen angeordnet an einem der benachbarten Ringelemente (12, 32; 32, 22), in Umfangsrichtung Ru und bei nicht anliegendem Drehmoment Mx derart zueinander ausgerichtet sind, dass deren Taschen-Tiefpunkte P_{T} auf einer gemeinsamen Radialachse A_{R} liegen.

11. Klauenkupplung nach einem der vorhergehenden Ansprüche, insbesondere einem der Ansprüche 8 - 10,
**dadurch gekennzeichnet, dass**
sich eine in Radialrichtung R_{R} verlaufende Tiefe T wenigstens einer Lagertasche (40) in Umfangsrichtung R_{U} des Ringelementes (12, 22, 32) an der die Lagertasche ausgebildet ist, verändert, optional stetig verändert, und weiter optional zunimmt und wieder abnimmt.

12. Klauenkupplung nach einem der vorhergehenden Ansprüche, insbesondere einem der Ansprüche 8 - 11,
**dadurch gekennzeichnet, dass**
Lagertaschen (40) einen kreisbogenförmigen oder dergleichen zu wenigstens einem Abschnitt des unverformten anstehenden Druckkörpers (50) komplementären in Radialrichtung zum Ringspalt (14, 24) weisenden Lagerbodenabschnitt (44) aufweisen, wobei optional zwei solcher, sich gegenüberliegender Lagertaschen (40), eine jede angeordnet an einem der benachbarten Ringelemente (12, 32; 32, 22), solche Lagerbodenabschnitte (44) aufweisen, die zusammen einen Lagerraum (41) einschließen, der in seiner Geometrie wenigstens abschnittsweise der des unbelasteten Druckkörpers (50) entspricht.

13. Klauenkupplung nach einem der vorhergehenden Ansprüche, insbesondere einem der Ansprüche 8 - 12,
**dadurch gekennzeichnet, dass**
Lagertaschen (40) einen kreisbogenförmigen oder dergleichen zu wenigstens einem Abschnitt des unverformten anstehenden Druckkörpers (50) komplementären in Radialrichtung R_{R} zum Ringspalt (14, 24) hinweisenden Lagerbodenabschnitt (44) aufweisen, der optional in einen in Radialrichtung R_{R} zum Ringspalt (14, 24) hinweisenden Rampenbodenabschnitt (46) ausläuft.

14. Klauenkupplung nach einem der vorhergehenden Ansprüche, insbesondere Anspruch 13,
**dadurch gekennzeichnet, dass**
der Rampenbodenabschnitt (46) in Radialrichtung zum Ringspalt (14, 24) hinweisend, eine optional stetig zunehmende Steigung aufweist.

15. Klauenkupplung nach einem der vorhergehenden Ansprüche, insbesondere einem der Ansprüche 8 - 14,
**dadurch gekennzeichnet, dass**
Lagerböden (42) von Lagertaschen (40), optional Rampenbodenabschnitte (46), in Radialrichtung zum Ringspalt (14, 24) hinweisend wenigstens abschnittsweise einem Geometrieabschnitt einer Spirale, optional einer Klothoide folgen.

16. Klauenkupplung nach einem der vorhergehenden Ansprüche, insbesondere einem der Ansprüche 13 - 15,
**dadurch gekennzeichnet, dass**
bei benachbarten Ringelementen (12, 32; 32, 22) gegenüberliegende Rampenbodenabschnitte (46) von Lagertaschen (40), in Bezug auf die Drehmomentenrichtung R_{M} am einen Ringelement (12; 32) als nachlaufende Rampenbodenabschnitte (46b) und am benachbarten Ringelement (32; 22) als vorrauslaufende Rampenbodenabschnitte (46a) ausgebildet sind.

17. Klauenkupplung nach einem der vorhergehenden Ansprüche, insbesondere einem der Ansprüche 13 - 16,
**dadurch gekennzeichnet, dass**
bei dem mit dem Antriebsmittel (2) verbundenen oder verbindbaren Ringelement (22; 12), Rampenbodenabschnitte (46) in Bezug auf die Drehmomentenrichtung R_{M} als nachlaufende Rampenbodenabschnitte (46b) ausgebildet sind, und optional gegenüberliegende Rampenbodenabschnitte (46) des benachbarten Ringelementes (32) als vorrauslaufende Rampenbodenabschnitte (46a) ausgebildet sind.

18. Klauenkupplung nach einem der vorhergehenden Ansprüche, insbesondere einem der Ansprüche 12 - 15,
**dadurch gekennzeichnet, dass**
sich Lagertaschenabschnitte, optional Rampenbodenabschnitte (46), ausgebildet an einem Ringelement (12; 32), derart in Umfangsrichtung R_{U} erstrecken, dass am benachbarten Ringelement (32; 22), wenigstens in einem Zustand in dem kein Drehmoment M_{X} wirkt, in Radialrichtung R_{R} gegenüberliegend keine Lagertaschenabschnitte ausgebildet sind.
